# EUROPÄISCHE PATENTSCHRIFT

(11) **EP 3 050 725 B1**
(45) Veröffentlichungstag und Bekanntmachung des Hinweises auf die Patenterteilung: **18.04.2018**
(21) Anmeldenummer: 15152680.3
(22) Anmeldetag: 27.01.2015
(51) Int. Cl.: B60G 17/005, B60P 1/04, B60G 17/017, B60P 1/28

(54) **Blockierungsvorrichtung für Fahrzeugfederungen**
Blocking device for vehicle suspension
Dispositif de blocage pour suspensions de véhicule

(43) Veröffentlichungstag der Anmeldung: 03.08.2016
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 0 378 949
- EP-A1- 0 698 547
- EP-A1- 2 292 452
- WO-A1-96/09179
- DE-A1- 2 159 121
- DE-A1-102010 026 468
- DE-T2- 69 713 877
- DE-T2- 69 913 600
- GB-A- 2 508 085
- JP-A- S59 220 409
- US-A- 2 997 342
- US-A- 3 083 059
- US-A- 6 152 486
- US-A1- 2006 244 225
- US-B1- 6 679 509

## Beschreibung

### Technisches Gebiet

Die vorliegende Erfindung betrifft eine Radachsenbaugruppe für Fahrzeuge und einen Fahrzeuganhänger.

### Technischer Hintergrund

Fahrzeuge weisen häufig eine am Fahrzeugrahmen federnd gelagerte Radachse auf, an deren seitlichen Enden jeweils Räder angebracht sind. Die Federung der Radachse bezüglich des Fahrzeugrahmens wird von einer Federungseinrichtung bereitgestellt. Bekannte Federungseinrichtungen weisen Schraubenfedern, Luftfederungen, hydropneumatische Federungen und Blattfederungen auf.

Insbesondere bei Nutzfahrzeugen, wie beispielsweise Lastkraftwagen und Bussen, ist die Luftfederung eine verbreitete Federungsart. Bei der Luftfederung erzeugt ein Kompressor Luftdruck, der über Federbälge eine komfortable Aufhängung der Radachse mit der Möglichkeit einer Niveauregulierung bewirkt.

Luftfederungen werden außerdem an Fahrzeuganhängern, wie beispielsweise Sattelaufliegern, Kippsattelaufliegern, landwirtschaftlichen Fahrzeuganhängern, Tiefladern, Gardinenaufliegern und Containerfahrzeugen, zur Federung der Radachsen eingesetzt. Es kann jedoch das Problem auftreten, dass sich der Luftvorrat in den entsprechenden Druckbehältern und Luftfederbälgen der Luftfederung im ausgeschalteten Zustand des Nutzfahrzeugs bei mehrmaligen Belastungen, beispielsweise beim Be- und Entladen des Fahrzeuganhängers, reduziert und sich somit der Vertikalabstand zwischen dem Fahrzeugrahmen und der Radachse verringert. Dies kann zur Folge haben, dass sich der Fahrzeugrahmen in Richtung der Fahrbahn absenkt. Beispielsweise beim Be- und Entladen an Laderampen kann es folglich zu einem Niveauunterschied zwischen der Laderampe und der Ladefläche des Fahrzeugs kommen, wodurch das Be- und Entladen des Fahrzeuganhängers erschwert werden kann.

Ferner kann es bei Kipperfahrzeugen und Kippfahrzeuganhängern während dem Kippvorgang dazu kommen, dass die in der Nähe der Kippachse am Fahrzeugrahmen angebrachte Radachse (zumeist die hinterste Radachse) vorübergehend eine erhöhte Last erfährt und deshalb der Fahrzeugrahmen an dieser Stelle weiter nach unten absinkt. Bei Asphaltkippern kann diese zur Folge haben, dass der Fahrzeugrahmen des Asphaltkippers mit dem Aufnahmebehälter des Asphaltfertigers, der den unverarbeiteten Asphalt aus der Mulde des Kipperfahrzeugs oder Kippfahrzeuganhängers aufnimmt, kollidiert und dadurch Schäden am Kipperfahrzeug, Kippfahrzeuganhänger, Kippmulde, oder am Asphaltfertiger auftreten können.

Aus der DE 10 2010 026 468 A1 ist eine Vorrichtung zum Arretieren der Achse eines mehrachsigen, luftgefederten Anhängers eines Lastkraftwagens auf einer vorbestimmten Anhängerseite am Rahmen des Anhängers bekannt. Die daraus bekannte Arretierungsvorrichtung weist eine achsseitige und eine rahmenseitige Aufnahme für ein gemeinsames Verbindungsmittel auf. Die Aufnahmen sind in einem vorbestimmten Vertikalabstand voneinander durch das Verbindungsmittel verbindbar, wobei der Vertikalabstand mindestens so groß ist, dass im Gebrauchszustand des Anhängers ein Notlaufabstand vorliegt, so dass im Pannenfall mit einer völlig entlasteten Bereifung weitergefahren werden kann.

Blockierungsvorrichtungen zum Blockieren von Federungswegen als solche sind beispielsweise aus den nachfolgenden Druckschriften bekannt: EP 0 698 547 A1, US 6,679,509 B1, EP 0 378 949 A1, JP S59 220409 A, EP 2 292 452 A1, DE 697 13 877 T2, US 2,997,342 A, DE699 13 600 T2, US 3,083,059 A, US 2006/0244225 A1, DE 2 159 121 A, und GB 2 508 085 A Allerdings sind diese bekannten Vorrichtungen alle mit dem Problem behaftet, dass die Montage aufgrund der einzelnen Komponenten relativ aufwändig ist. Auch die Nachrüstbarkeit dieser Vorrichtungen an bestehende Fahrzeuge ist eingeschränkt, da auch Fahrzeugrahmenteile an solche Blockierungsvorrichtungen anzupassen sind. Blockierungvorrichtungen die ausdrücklich auch als Nachrüstung installiert werden können sind aus den nachfolgenden Druckschriften bekannt: US 6,152,486 A, WO 96/09179 A1 und US 5,921,532 A.

Das der Erfindung zugrunde liegende technische Problem besteht darin, eine Radachsenbaugruppe bereitzustellen, bei der eine Blockierungsvorrichtung einfach ausgestaltet ist, die ohne Weiteres an bestehende Fahrzeuge nachrüstbar ist und deren Montierbarkeit verbessert ist. Die Blockierungsvorrichtung selbst soll dabei eine vorbestimmte Höhe eines Fahrzeugrahmens oberhalb der Fahrbahn auf einfache, kostengünstige und stabile Art und Weise kontinuierlich beibehalten, insbesondere in Zuständen, in denen die Zündung des Fahrzeugs ausgeschalten ist und Be- und Entladevorgänge des Fahrzeugs stattfinden.

### Darstellung der Erfindung

Dieses der Erfindung zugrunde liegende technische Problem wird durch eine Radachsenbaugruppe mit den Merkmalen des Anspruchs 1 gelöst.

Gemäß einem weiteren Aspekt der vorliegenden Erfindung ist ein Fahrzeuganhänger offenbart, der einen Fahrzeugrahmen und eine am Fahrzeugrahmen federnd gelagerte erfindungsgemäße Radachsenbaugruppe aufweist.

Mit der erfindungsgemäßen Radachsenbaugruppe und der daran angebrachten Blockierungsvorrichtung kann der Einfederungsweg der Federungseinrichtung zumindest teilweise blockiert werden. Dadurch kann sichergestellt werden, dass bei einer auf den Fahrzeugrahmen aufgebrachten Belastung ab einem vorbestimmten Abstand zwischen dem Fahrzeugrahmen und der Radachsen ein weiteres Einfedern durch mechanisches Blockieren des Einfederungswegs verhindert wird. Folglich kann der Abstand zwischen dem Fahrzeugrahmen und der Fahrbahn im Wesentlichen fixiert werden, wodurch eine Mindesthöhe der Ladefläche oberhalb der Fahrbahn gewährleistet werden kann. Somit kann durch das Einbringen des Blockierungselements zwischen dem Fahrzeugrahmen und der Radachse sichergestellt werden, dass während Be- und Entladevorgängen des Fahrzeugs Einfederungsbewegungen auftreten, die über ein vorbestimmtes Maß hinausgehen.

Insbesondere kann das Blockieren des Einfederungswegs der Federungseinrichtung bei Kipperfahrzeugen und Kippfahrzeuganhängern vorteilhaft sein, da durch das Blockieren des Einfederungswegs der Federungseinrichtung, die der der Kippachse nächstgelegenen Radachse zugeordnet ist, eine Kollision des Fahrzeugrahmens mit beispielsweise dem Aufnahmebehälter eines Asphaltfertigers vermieden werden kann. Außerdem kann sichergestellt werden, dass es zwischen beispielsweise einer Laderampe und der Ladefläche des Fahrzeugs während Be- und Entladevorgängen zu keinen Niveauunterschieden kommt und somit das Be- und Entladen sicher durchgeführt werden kann, ohne dass es z. B. einer Druckbeaufschlagung der Luftfederungseinrichtung bedarf.

In einer beispielhaften Ausgestaltung der Erfindung weist die Stellvorrichtung eine Drehwelle, an der das Blockierungselement befestigt ist, und eine Stelleinheit auf, die mit der Drehwelle verbunden und dazu ausgebildet ist, die Drehwelle zum Bewegen des Blockierungselements zu drehen. Beispielsweise ist das Blockierungselement in der Freigabestellung mit dem Fahrzeugrahmen und der Radachse außer Eingriff, d. h. dass die Federungseigenschaften der Federungseinrichtung durch das Blockierungselement nicht beeinflusst werden und somit die Federungseigenschaften der Federungseinrichtung vollständig verfügbar sind. Bei einer Drehung des Blockierungselements aus der Freigabestellung in die Blockierungsstellung ist das Blockierungselement zwischen dem Fahrzeugrahmen und der Radachse angeordnet, d. h. dass der Einfederungsweg der Federungseinrichtung blockiert wird. In der Blockierungsstellung des Blockierungselements liegt der gewünschte Blockierungsabstand zwischen dem Fahrzeugrahmen und der Radachse vor, wodurch eine gewünschte Mindesthöhe der Ladefläche oberhalb der Fahrbahn gewährleistet werden kann.

In der Blockierungsstellung des Blockierungselements befindet sich das Blockierungselement zwischen dem Fahrzeugrahmen und der Radachse und versteift somit die Verbindung zwischen dem Fahrzeugrahmen und der Radachse derart, dass der Einfederungsweg der Federungseinrichtung blockiert ist. Dabei ist anzumerken, dass der Ausfederungsweg der Federungseinrichtung weiterhin freigegeben ist.

Beispielsweise ist die Stelleinheit eine lineare Stelleinheit, die mit der Drehwelle z. B. über einen Exzenter exzentrisch verbunden und dazu ausgebildet ist, eine translatorische Bewegung zu erzeugen, die mittels dem Exzenter in eine rotatorische Bewegung der Drehwelle und des Blockierungselements umgewandelt wird. Die Stelleinheit ist beispielsweise eine pneumatisch betätigte Stelleinheit, eine hydraulisch betätigte Stelleinheit oder eine elektrisch betätigte Stelleinheit. In einer Ausführungsform wird die pneumatisch betätigte Stelleinheit mit Druckluft eines am Fahrzeug befindlichen Druckluftsystems versorgt. In einer weiteren Ausführungsform wird die Stelleinheit über eine vom Zündungszustand des Fahrzeugs unabhängigen Leistungsquelle versorgt, z. B. von einer Batterie.

In einer beispielhaften Ausführungsform weist die Blockierungsvorrichtung zwei Blockierungselemente auf, die dazu ausgebildet sind, den jeweiligen Einfederungsweg einer der zwei Federungseinrichtungen zu blockieren, die jeweils die Radachse am Fahrzeugrahmen federnd lagern. Wenn die Radachse an ihren beiden Radnaben zwei Räder aufzunehmen, kann die Radachse an jeder Seite eine Federungseinrichtung aufweisen, deren Einfederungsweg jeweils durch eines der mehreren Blockierungselemente zumindest teilweise blockiert wird. Beispielsweise sind die Blockierungselemente derart angeordnet, dass sich diese in seitlicher Richtung an einem äußeren Endbereich der Radachse befinden.

In einer beispielhaften Ausführungsform ist die Federungseinrichtung der erfindungsgemäßen Radachsenbaugruppe eine Spiralfederungseinrichtung, eine Parabelfedereinrichtung eine Luftfederungseinrichtung, eine hydropneumatische Federungseinrichtung oder eine Blattfederungseinrichtung.

In einer beispielhaften Ausführungsform kann vor dem Einbringen des Blockierungselements zwischen dem Fahrzeugrahmen und der Radachse der Vertikalabstand zwischen dem Fahrzeugrahmen und der Radachse derart eingestellt werden, dass das Blockierungselement problemlos in die Blockierungsstellung bewegt werden kann. Das Einstellen des Vertikalabstands kann beispielsweise ein Ausfedern der Federungseinrichtung aufweisen. Vorzugsweise ist der Vertikalabstand vor dem Einbringen des Blockierungselements größer als der Blockierungsabstand. Somit kann nach dem Einstellen des Vertikalabstands und dem Einbringen des Blockierungselements zwischen dem Blockierungselement und dem Fahrzeugrahmen oder der Radachse ein Spalt vorhanden sein. Vorzugsweise weist der Spalt eine kleinstmögliche vertikale Ausdehnung auf, die es dem Blockierungselement dennoch ermöglicht, aus der Freigabestellung in die Blockierungsstellung bewegt zu werden.

In einer weiteren beispielhaften Ausführungsform erfolgt nach dem Anordnen der Blockierungselemente in der Blockierungsstellung ferner ein Einfedern der Federungseinrichtung, so dass die Blockierungselemente mit dem Fahrzeugrahmen und der Radachse in Eingriff gelangen und der Einfederungsweg der Federungseinrichtungen blockiert ist. Das Einfedern kann sicherstellen, dass der Fahrzeugrahmen auf dem sich auf der Radachse abstützenden Blockierungselement aufliegt und der Einfederungsweg in dieser Stellung vollständig blockiert ist. Damit kann gewährleistet werden, dass der Abstand zwischen dem Fahrzeugrahmen und dem Boden festgelegt bzw. fixiert ist, d .h. dass der gewünschte Blockierungsabstand zwischen dem Fahrzeugrahmen und der Radachse vorliegt.

In einer weiteren beispielhaften Ausführungsform weist das Anordnen des Blockierungselements ein Drehen einer Drehwelle auf, die mit dem Blockierungselement starr verbunden ist. Durch das Drehen der Drehwelle kann das Blockierungselement aus der Freigabestellung in die Blockierungsstellung oder aus der Blockierungsstellung in die Freigabestellung gedreht werden.

In einer weiteren beispielhaften Ausführungsform weist das Ausfedern der Federungseinrichtung zum Einstellen eines notwendigen Vertikalabstands zwischen dem Fahrzeugrahmen und der Radachse ein Befüllen der Luftfederungseinrichtung mit Druckluft auf. Das Befüllen der Luftfederungseinrichtung mit Druckluft kann zumindest teilweise ein Ausfedern der Luftfederungseinrichtung bewirken, so dass sich der Vertikalabstand zwischen Fahrzeugrahmen und Radachse erhöht. In der ausgefederten Stellung des Fahrzeugrahmens kann das Blockierungselement in die Blockierungsstellung problemlos bewegt werden.

In einer beispielhaften Ausführungsform kann die Blockierungsvorrichtung ferner dazu ausgebildet sein, den Ausfederungsweg der Federungseinrichtung zu blockieren. In einer solchen Ausführungsform kann das Blockierungselement derart mit dem Fahrzeugrahmen und der Radachse in Eingriff gelangen, dass in der Blockierungsstellung des Blockierungselements sowohl der Einfederungsweg als auch der Ausfederungsweg der Federungseinrichtung blockiert wird. Beispielsweise kann das Blockierungselement hierzu eine Eingriffsvorrichtung, wie beispielsweise einen Haken aufweisen, die mit dem Fahrzeugrahmen in Eingriff gelangt und somit ein Ausfedern des Fahrzeugrahmens gegenüber der Radachse blockiert.

Die erfindungsgemäße Radachsenbaugruppe ist an jeglichen Fahrzeugen einsetzbar, die eine an einem Fahrzeugrahmen federnd gelagerte Radachse aufweisen. Bevorzugt ist die erfindungsgemäße Radachsenbaugruppe an Nutzfahrzeugen, wie z. B. Busse, Lastkraftwagen, Kipperfahrzeuge, Containerfahrzeuge und Zugfahrzeugen einsetzbar. Im Rahmen der vorliegenden Offenbarung sind unter dem Begriff Nutzfahrzeuge auch Fahrzeuganhänger wie beispielsweise landwirtschaftliche Fahrzeuganhänger, Sattelauflieger, Kippsattelauflieger, Tieflader, Gardinenauflieger und Containerfahrzeuge, zu.

In einer weiteren Ausführungsform kann das Blockierungselement eine variabel einstellbare Länge aufweisen, so dass das Blockierungselement dazu ausgebildet ist, den Blockierungsabstand variabel einstellbar zu machen. Durch das variabel einstellbare Blockierungselement kann der Blockierungsabstand den Umgebungsbedingungen angepasst werden, wie beispielsweise der Höhe einer Laderampe, so dass sich die Ladefläche des Fahrzeugs auf einem gleichen Niveau wie die Laderampe befindet.

In einer Ausführungsform weist die Blockierungsvorrichtung ferner einen Sensor auf, der dazu ausgebildet ist, einen Betriebszustand des Fahrzeugs zu erfassen und in Abhängigkeit des erfassten Betriebszustands der Stellvorrichtung ein Signal bereitzustellen, das einen Befehl zum Anordnen des Blockierungselements in der Blockierungsstellung anzeigt. Bei z. B. einem Kippsattelauflieger kann der Sensor ein Berührungs- oder Drucksensor sein, der eine Berührung zwischen der Kippmulde und dem Fahrzeugrahmen erfasst. Sobald mittels dem Sensor festgestellt wird, das sich die Kippmulde vom Fahrzeugrahmen löst, beispielsweise während eines Kippvorgangs, kann der Sensor ein entsprechendes Signal erzeugen und der Stellvorrichtung bereitstellen, die daraufhin das Blockierungselement in die Blockierungsstellung bewegt.

Mit der erfindungsgemäßen Radachsenbaugruppe können an dem mit der an der Radachse angebrachten Blockierungsvorrichtung ausgestatteten Fahrzeug zusätzliche Abstützungen entfallen, die zum Fixieren der Fahrzeugrahmenhöhe zwischen dem Fahrzeugrahmen und der Fahrbahn eingebracht werden können.

### Kurze Beschreibung der Zeichnungen

Weitere Merkmale und Aspekte der vorliegenden Erfindung werden durch die folgende Beschreibung und die beiliegenden Zeichnungen offensichtlich, in denen:
Fig. 1 eine schematische Seitenansicht eines Fahrzeuggespanns aus Zugfahrzeug und Kippsattelauflieger während eines Schüttvorgangs von unverarbeitetem Asphaltgut aus der Kippmulde des Kippsattelaufliegers in einen Aufnahmebehälter eines Asphaltfertigers darstellt,
Fig. 2 eine perspektivische Ansicht einer erfindungsgemäßen Radachsenbaugruppe darstellt, die eine Blockierungsvorrichtung aufweist,
Fig. 3 eine Seitenansicht der am Fahrzeugrahmen des Kippsattelaufliegers der Fig. 1 federnd gelagerten Radachsenbaugruppe der Fig. 2 darstellt, in der sich die Blockierungselemente der Blockierungsvorrichtung in der Freigabestellung befinden,
Fig. 4 eine Seitenansicht der am Fahrzeugrahmen des Kippsattelaufliegers der Fig. 1 federnd gelagerten Radachsenbaugruppe der Fig. 2 darstellt, in der sich die Blockierungselemente der Blockierungsvorrichtung in der Blockierungsstellung befinden,
Fig. 5 eine perspektivische Ansicht eines Blockierungselements einer Blockierungsvorrichtung darstellt, das sich in der Freigabestellung befindet,
Fig. 6 eine perspektivische Ansicht eines Blockierungselements einer Blockierungsvorrichtung darstellt, das sich in der Blockierungsstellung befindet,
Fig. 7 eine perspektivische Ansicht einer Stellvorrichtung der Blockierungsvorrichtung darstellt,
Fig. 8 eine Schnittansicht durch die Stellvorrichtung entlang der Linie VIII - VIII in der Fig. 7 darstellt,
Fig. 9 eine Ansicht eines Sensors zum Erfassen eines Betriebszustands des Fahrzeugs in einer Stellung zeigt, in der sich die Kippmulde des Kippsattelanhängers der Fig. 1 in der vollständig abgesenkten Position befindet, und
Fig. 10 eine Ansicht des Sensors der Fig. 9 in einer Stellung zeigt, in der sich die Kippmulde des Kippsattelanhängers der Fig. 1 in einer zumindest teilweise angehobenen Position befindet.

### Ausführliche Beschreibung von Ausführungsbeispielen

In der Beschreibung dieser Erfindung beziehen sich Richtungsangaben auf einen Fahrzeuganhänger bei Vorwärtsfahrt. In seitlicher Richtung bedeutet somit diejenige Richtung, die entlang der Senkrechten zu einem Vorwärtsfahrtrichtungsvektor des Fahrzeuganhängers verläuft und der Links-Rechts-Richtung entspricht. Ferner bedeutet in vertikaler Richtung diejenige Richtung, die entlang der Senkrechten zur Fahrbahn des Fahrzeuganhängers verläuft.

Im Rahmen der vorliegenden Offenbarung beschreiben das "Einfedern" und das "Ausfedern" der Federungseinrichtung jeweils eine Relativbewegung zwischen dem Fahrzeugrahmen und der Radachse, die über die Federungseinrichtung federnd am Fahrzeugrahmen gelagert ist. Beim "Einfedern" der Federungseinrichtung verkleinert sich der Vertikalabstand zwischen dem Fahrzeugrahmen und der Radachse, während sich beim "Ausfedern" der Federungseinrichtung der Vertikal abstand zwischen dem Fahrzeugrahmen und der Radachse vergrößert.

Im Rahmen der vorliegenden Offenbarung beschreiben der "Einfederungsweg" und der "Ausfederungsweg" der Federungseinrichtung denjenigen Weg, den der Fahrzeugrahmen relativ zur Radachse, die Radachse relativ zum Fahrzeugrahmen oder die Summe dieser beiden Bewegungswege aus einer vorbestimmten Federungsposition zurücklegt. Die vorbestimmte Federungsposition ist beispielsweise eine neutrale Position der Federungseinrichtung, in der der unbewegte Fahrzeugrahmen mit dem aktuell zugeladenen Gewicht von der Federungseinrichtung auf der Radachse federnd gelagert wird. Beispielsweise treten durch Fahrbewegungen des Fahrzeugs oder während Be- und Entladevorgängen Ein- und Ausfederungsbewegungen der Federungseinrichtung auf, die zu einem Ein- und Ausfederungsweg des Fahrzeugrahmens bezüglich der Radachse führen.

Im Rahmen der vorliegenden Offenbarung beschreibt der "Vertikalabstand" den Abstand zwischen dem Fahrzeugrahmens und der Radachse an einer Position, an der die Blockierungsvorrichtung zwischen dem Fahrzeugrahmen und der Radachse angeordnet werden kann. Beispielsweise beschreibt der "Vertikalabstand" den Abstand zwischen der Unterseite des Fahrzeugrahmens und der Oberseite der Radachse. Ferner beschreibt der "Vertikalabstand" den Abstand zwischen dem Fahrzeugrahmen und der Radachse, der in einem Zustand vorliegt, in dem die Federungseinrichtung freigegeben bzw. unblockiert ist. Demgegenüber beschreibt der "Blockierungsabstand" den Abstand zwischen dem Fahrzeugrahmen und der Radachse, der in einem Zustand vorliegt, in dem der Einfederungsweg durch das Blockierungselement blockiert ist.

Der vorliegenden Erfindung liegt der Gedanke zu Grunde, den Einfederungsweg einer Federungseinrichtung, die eine Radachse eines Fahrzeugs federnd an einem Fahrzeugrahmen des Fahrzeugs lagert, während bestimmten Betriebszuständen des Fahrzeugs derart zu blockieren, dass sich zwischen dem Fahrzeugrahmen und der Radachse ein vorbestimmter Blockierungsabstand einstellt, wodurch sich außerdem ein vorbestimmter Abstand zwischen dem Fahrzeugrahmen und der Fahrbahn einstellt. Dazu kann ein Blockierungselement zwischen dem Fahrzeugrahmen und der Radachse eingebracht werden, das den Einfederungsweg der Federungseinrichtung blockiert und somit den Blockierungsabstand zwischen dem Fahrzeugrahmen und der Radachse vorsieht.

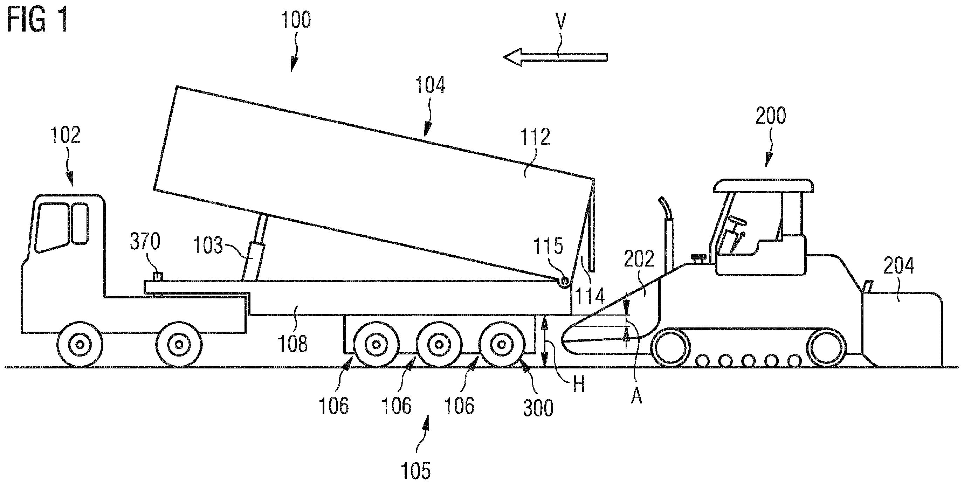

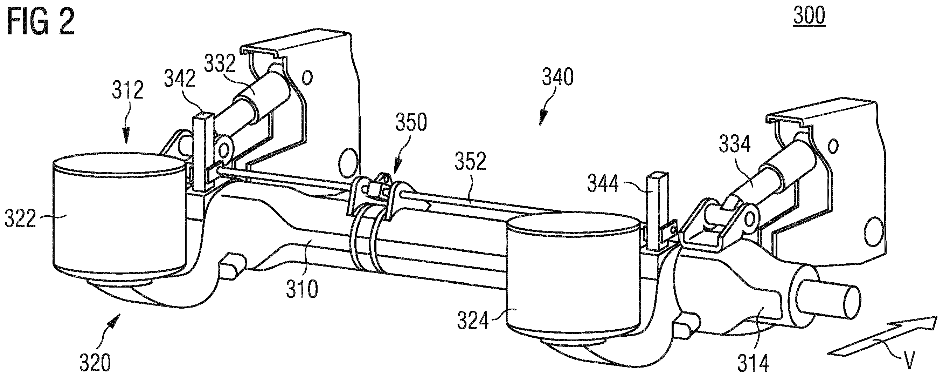

Eine beispielhafte Ausführungsform der vorliegenden Erfindung ist aus den Fig. 1 bis 8 ersichtlich. Die Fig. 1 zeigt beispielhaft ein Zuggespann 100, das sich entlang der Vorwärtsrichtung V bewegt und aus einem Zugfahrzeug 102 und einem vom Zugfahrzeug 102 gezogenen Kippsattelauflieger 104 besteht, der mit dem Zugfahrzeug 102 über eine Sattelkupplung (nicht explizit dargestellt) lösbar verbunden werden kann. Der Kippsattelauflieger 104 weist, wie in der Fig. 1 gezeigt, ein Fahrwerk 105 mit insgesamt drei Radachsen 106 auf, die jeweils an einem Fahrzeugrahmen 108 über eine Federungseinrichtung 320 (siehe Fig. 2) federnd gelagert sind. In weiteren Ausführungsformen kann der Kippsattelauflieger 104 mehr oder weniger als drei Radachsen 106 aufweisen.

In der Fig. 1 ist ferner ein Asphaltfertiger 200 dargestellt, der einen Aufnahmebehälter 202 aufweist, der dazu ausgebildet ist, unverarbeitetes Asphaltgut aus einer Kippmulde 112 des Kippsattelaufliegers 104 aufzunehmen und mittels einer Einbaubohle 204 zu einer Fahrbahn zu verarbeiten. Damit das unverarbeitete Asphaltgut im Aufnahmebehälter 202 direkt aus der Kippmulde 112 aufgenommen werden kann, ist die Kippmulde 112 während eines Ausschüttvorgangs derart bezüglich dem Aufnahmebehälter 202 angeordnet, dass sich eine Ausschüttöffnung 114 der Kippmulde 112 oberhalb des Aufnahmebehälter 202 befindet, wobei ein Abstand A zwischen dem Fahrzeugrahmen 108 und dem Aufnahmebehälter 202 vorgesehen ist.

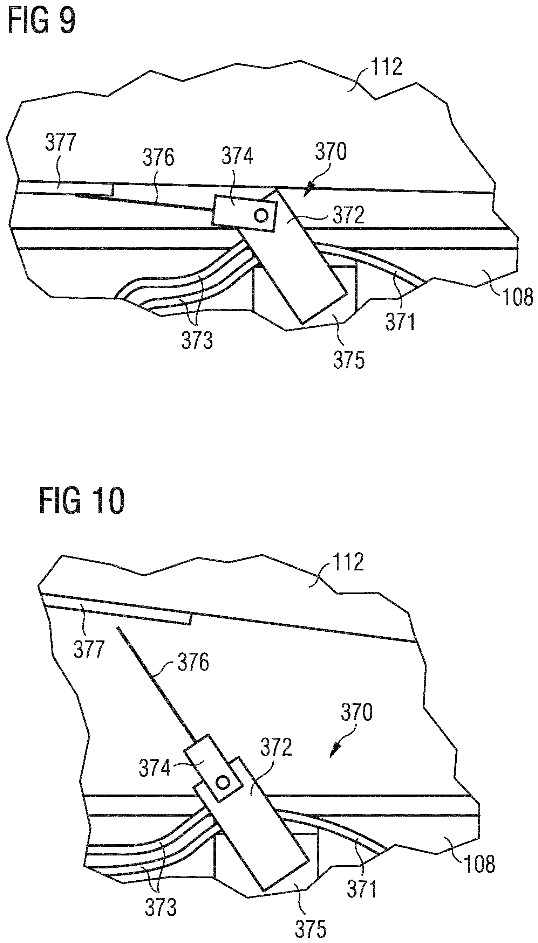

Am Kippsattelauflieger 104 ist ferner ein Sensor 370 angeordnet, der als Berührungs- oder Drucksensor ausgebildet ist und eine Berührung der Kippmulde 112 mit dem Fahrzeugrahmen 108 erfasst (siehe auch Fig. 9 und 10). Der Sensor 370 ist vorzugsweise in einem vorderen Bereich der Kippmulde 112 am Fahrzeugrahmen 108 angebracht. Wird ein Teleskopzylinder 103 zum Kippen der Kippmulde 112 betätigt, kann der Sensor 370 ein Lösen der Kippmulde 112 vom Fahrzeugrahmen 108 erfassen und ein entsprechendes Signal erzeugen.

Unter Verweis auf die Fig. 2 ist eine beispielhafte erfindungsgemäße Radachsenbaugruppe 300 in perspektivischer Ansicht dargestellt. Die Radachsenbaugruppe 300 der Fig. 2 zeigt beispielhaft eine Radachse 310, an der eine erfindungsgemäße Blockierungsvorrichtung 340 angebracht ist. Der in der Fig. 1 gezeigte Kippsattelanhänger 104 weist zumindest eine erfindungsgemäße Radachsenbaugruppe 300 auf, wobei vorzugsweise die hinterste Radachse 106 gemäß der Radachsenbaugruppe 300 der Fig. 2 ausgestaltet ist.

Die Radachsenbaugruppe 300 der Fig. 2 weist eine Radachse 310 auf, an deren seitlichen Enden jeweils Radnaben 312, 314 vorgesehen sind, an denen jeweils ein Rad (nicht gezeigt) angebracht werden kann. Die Radachse 310 kann über eine Federungseinrichtung 320, die in dem in den Zeichnungen dargestellten Beispiel als Luftfederungseinrichtung bestehend aus zwei Luftbälgen 322, 324 ausgebildet ist, am Fahrzeugrahmen 108 federnd gelagert werden. Die Radachsenbaugruppe 300 weist ferner eine Dämpfungseinrichtung bestehend aus zwei Dämpfern 332, 324 auf, die dazu ausgebildet sind, die Federungsbewegungen der Federungseinrichtung 320 zu dämpfen. Die Radachsenbaugruppe 300 weist zusätzliche Elemente auf, wie beispielsweise Radträger, Radlager und Bremsvorrichtungen, die der Einfachheit halber nicht in den Zeichnungen dargestellt sind.

Die erfindungsgemäße Radachsenbaugruppe 300 weist, wie in der Fig. 2 gezeigt, die Blockierungsvorrichtung 340 auf, die an der Radachse 310 befestigt ist. Die Blockierungsvorrichtung 340 umfasst in dem in den Zeichnungen gezeigten Beispiel zwei Blockierungselemente 342, 344 und eine Stellvorrichtung 350, die dazu ausgebildet ist, die Blockierungselemente 342, 344 mittels einer Drehwelle 352 zwischen einer Freigabestellung und einer Blockierungsstellung zu bewegen. In weiteren Ausführungsformen weist die Blockierungsvorrichtung 340 weniger oder mehr als zwei Blockierungselemente 342, 344 auf.

Jedes der Blockierungselemente 342, 344 ist dazu ausgebildet, in der Freigabestellung den Einfederungsweg der Federungseinrichtung 320 freizugeben und in der Blockierungsstellung den Einfederungsweg der Federungseinrichtung 320 zu blockieren. Beispielsweise kann die Federungseinrichtung 320 einen gesamten Federungsweg von bis zu 1500 mm zulassen, insbesondere einen gesamten Federungsweg zwischen ungefähr 150 mm und ungefähr 800 mm. Der gesamte Federungsweg ist die Summe aus dem verfügbaren Einfederungsweg und dem verfügbaren Ausfederungsweg relativ zur neutralen Federungsposition.

Die an der Radachse 310 befestigte Stellvorrichtung 350 ist dazu ausgebildet, die Blockierungselemente 342, 344 in Erwiderung auf das vom Sensor 370 (siehe Fig. 1) erzeugte Signal aus der Freigabestellung in die Blockierungsstellung zu bewegen. Der Sensor 370 ist Teil der Blockierungsvorrichtung und kann jeglicher Sensor sein, der dazu im Stande ist, einen Betriebszustand des Kippsattelaufliegers 104 zu erfassen, in dem ein Bewegen der Blockierungselemente 342, 344 in die Blockierungsstellung notwendig sein kann.

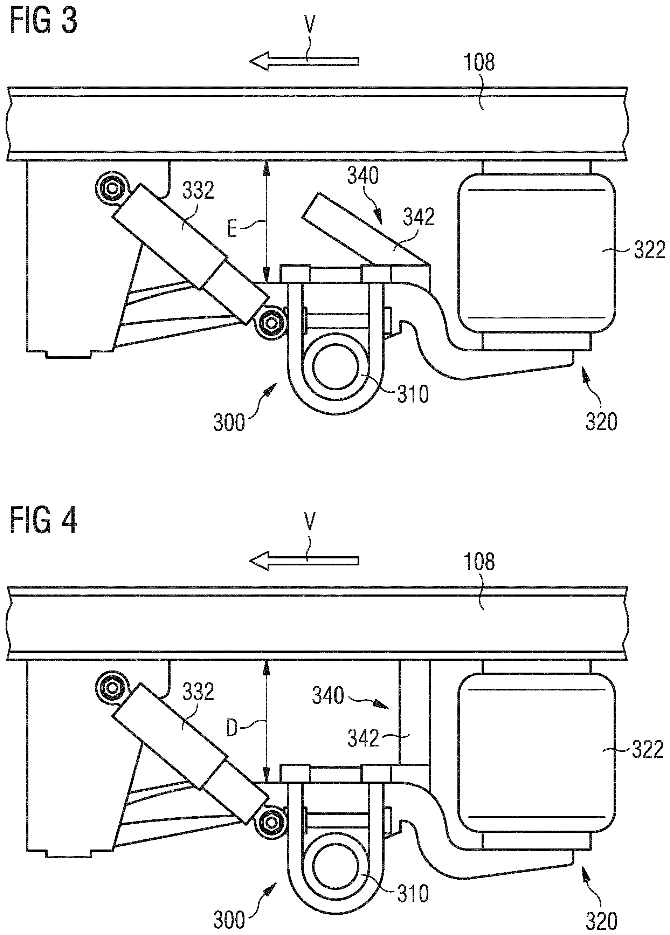

In der Fig. 3 ist eine Seitenansicht der am Fahrzeugrahmen 108 des Kippsattelaufliegers 104 federnd gelagerten Radachsenbaugruppe 300 gezeigt. In der Fig. 3 sind die Blockierungselemente 342, 344 (in der Fig. 3 ist nur das Blockierungselement 342 sichtbar) in der Freigabestellung gezeigt. In dieser Stellung können sich die Radachse 310 und der Fahrzeugrahmen 108 aufgrund der Federungseigenschaften der Federungseinrichtung 320 relativ zueinander bewegen, wobei sich dadurch ein Vertikalabstand E zwischen dem Fahrzeugrahmen 108 und der Radachse 310 ändert. Der Vertikalabstand E kann beispielsweise als der Abstand zwischen der Oberseite der Radachse 310 und der Unterseite des Fahrzeugrahmens 108 definiert werden.

Die Federungshärte der Federungseinrichtung 320 kann durch Be- und Entlüften der Luftbälge 322, 324 wie gewünscht eingestellt werden, wobei durch das Be- und Entlüften der Luftbälge 322, 324 primär der Abstand H (siehe Fig. 1) zwischen dem Fahrzeugrahmen 108 und der Fahrbahn eingestellt wird. Beispielsweise kann die von der Federungseinrichtung 320 bereitgestellte Federungshärte in Abhängigkeit des Beladungsgewichts der Kippmulde 112 (siehe Fig. 1) eingestellt werden.

Unter nochmaligem Verweis auf die Fig. 1 kann sich während eines Kippvorgangs der Kippmulde 112 die auf die Kippachse 115 der Kippmulde 112 wirkende Last erhöhen, wodurch sich die Belastung der hintersten Radachse 106 ebenfalls erhöhen kann. Die höhere Belastung der hintersten Radachse 106 (siehe Fig. 1) kann an dieser Radachse zu einem erhöhten Einfederungsweg der Federungseinrichtung 320 führen, was dazu führen kann, dass sich der Abstand A zwischen dem Fahrzeugrahmen 108 und dem Aufnahmebehälter 202 verkleinert, in manchen Fällen sogar verschwindet. Der letztere Fall führt zu einer Kollision des Fahrzeugrahmens 108 mit dem Asphaltfertiger 200, wodurch Beschädigungen am Kippsattelauflieger 104 und am Asphaltfertiger 200 auftreten können und der Kippvorgang nicht realisiert werden kann, da der Asphaltfertiger 200 nicht unter den Fahrzeugrahmen 108 fahren kann.

Damit ein ausreichender Abstand A gewährleistet werden kann, wird die an der Radachse 310 befestigte Blockierungsvorrichtung 340 derart gesteuert, dass sich die Blockierungselemente 342, 344 mittels der Stellvorrichtung 350 aus der in der Fig. 3 dargestellten Freigabestellung in die in der Fig. 4 dargestellten Blockierungsstellung bewegen, in der der Einfederungsweg der Federungseinrichtung 320 blockiert ist. Das Ansteuern der Blockierungsvorrichtung 340 kann beispielsweise manuell vom Betreiber des Zuggespanns 100 erfolgen, in dem dieser die Blockierungsvorrichtung 340 wie weiter unten beschrieben betätigt. Wie bereits oben erläutert, kann die Blockierungsvorrichtung 340 in Abhängigkeit des Betriebszustands des Fahrzeugs 104 gesteuert werden, beispielsweise in Abhängigkeit des vom Sensor 370 erzeugten Signals.

In der Fig. 4 sind die Blockierungselemente 342, 344 (in der Fig. 4 ist nur das Blockierungselement 342 sichtbar) in der Blockierungsstellung gezeigt, in der der von der Federungseinrichtung 320 bereitgestellte Einfederungsweg blockiert ist. Aus der Fig. 4 geht hervor, dass die Blockierungselemente 342, 344 eine starre Verbindung zwischen der Radachse 310 und dem Fahrzeugrahmen 108 herstellen. Der Fahrzeugrahmen 108 liegt in der in der Fig. 4 dargestellten Blockierungsstellung der Blockierungselemente 342, 344 auf den Blockierungselementen 342, 344 auf, die sich auf der Radachse 310 abstützen. Somit ist die Einfederungseigenschaft der Federungseinrichtung 320 blockiert. Durch das Blockieren des Einfederungswegs der Federungseinrichtung 320 kann der Vertikalabstand E auf den Blockierungsabstand D mit einem gewünschten Betrag festgelegt werden, der einen ausreichenden Abstand A (siehe Fig. 1) gewährleisten kann.

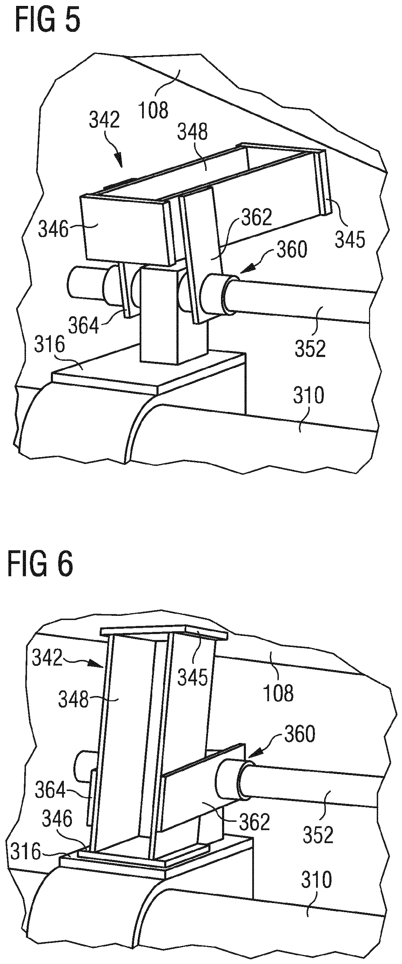

In den Fig. 5 und 6 sind jeweils perspektivische Ansichten des Blockierungselements 342 dargestellt, das an einer Seite der Radachse 310 angeordnet ist. In der Fig. 5 ist das Blockierungselement 342 in der Freigabestellung und in der Fig. 6 in der Blockierungsstellung gezeigt. Die im Folgenden beschriebene Ausgestaltung des Blockierungselements 342 trifft im Wesentlichen auch auf die Ausgestaltung des auf der anderen Seite der Radachse 310 angeordneten Blockierungselements 344 zu.

Das Blockierungselement 342 ist an der Radachse 310 über eine Lagerungsvorrichtung 360 und starr an der Drehwelle 352 befestigt. Das Blockierungselement 342 ist beispielsweise ein Profilelement und weist einen ersten Abstützungsbereich 345, der dazu ausgebildet ist, in der Blockierungsstellung den Fahrzeugrahmen 108 abzustützen, einen zweiten Abstützungsbereich 346, der dazu ausgebildet ist, sich in der Blockierungsstellung auf der Radachse 310 abzustützen, und einen den ersten Abstützungsbereich 345 mit dem zweiten Abstützungsbereich 346 verbindenden Verbindungsbereich 348 auf. Durch eine geeignete Auswahl der Länge des Verbindungsbereichs 348 kann der Blockierungsabstand D (siehe Fig. 3 und 4) zwischen der Radachse 310 und dem Fahrzeugrahmen 108 wie gewünscht eingestellt werden.

In einer weiteren Ausgestaltung ist der Verbindungsbereich 348 in seiner Länge variabel einstellbar. Beispielsweise ist der Verbindungsbereich 348 teleskopartig ausgeführt, damit ein gewünschter Blockierungsabstand D zwischen der Radachse 310 und dem Fahrzeugrahmen 108 eingestellt werden kann. Der teleskopartige Verbindungsbereich 348 kann dann zunächst auf die gewünschte Länge eingestellt werden, in dieser Einstellung arretiert werden und daraufhin von der Stellvorrichtung 350 in die Blockierungsstellung zum Blockieren des Einfederungswegs der Federungseinrichtung 320 bewegt werden.

In den Fig. 5 und 6 ist gezeigt, dass die Lagerungsvorrichtung 360 Exzenterelemente 362, 364 aufweist, an denen das Blockierungselement 342 bezüglich der Drehachse der Drehwelle 352 exzentrisch angebracht ist. Die Lagerungsvorrichtung 360 ist beispielsweise in Form eines geschmierten Scharniergelenks vorgesehen, das auf der einen Seite an der Radachse 310 und auf der anderen Seite am jeweiligen Blockierungselement 342 angebracht ist. In weiteren Ausführungsformen kann die Lagerungsvorrichtung 360 ein Wälzlager aufweisen.

Damit sich der zweite Abstützungsbereich 346 auf der Radachse 310 fest abstützen kann, ist vorzugsweise an der Radachse 310 ein der Form des zweiten Abstützungsbereichs 346 entsprechender Aufnahmebereich 316 (siehe Fig. 5 und 6) vorgesehen. In dem in den Fig. 5 und 6 dargestellten Beispiel sind der zweite Abstützungsbereich 346 und der Aufnahmebereich 316 jeweils als ebener Bereich ausgestaltet. In weiteren Ausführungsformen können der zweite Abstützungsbereich 346 und der Aufnahmebereich 316 jeweils Formen aufweisen, die sich im Wesentlichen entsprechen, wie beispielsweise halbkreisförmige Bereiche. Somit können die Abstützungskräfte des Fahrzeugrahmens 108 über die Blockierungselemente 342, 344 in die Radachse 310 eingeleitet werden.

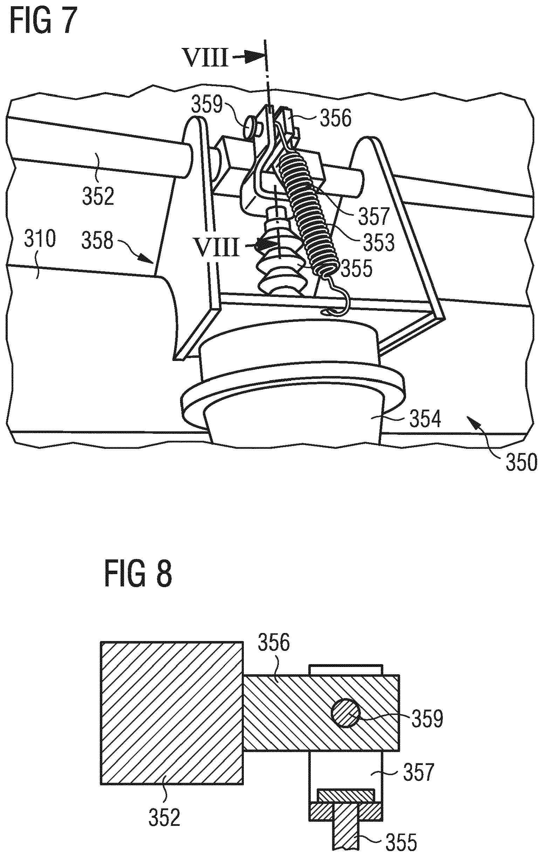

In der Fig. 7 ist eine beispielhafte Stellvorrichtung 350 dargestellt, die dazu ausgebildet ist, über eine Drehung der Drehwelle 352 die Blockierungselemente 342, 344 zwischen der Freigabestellung und der Blockierungsstellung zu drehen. Die Stellvorrichtung 350 weist die Drehwelle 352 und eine Stelleinheit 354 auf.

Die Stelleinheit 354 ist über eine Befestigungsvorrichtung 358 an der Radachse 310 starr befestigt. Die Stelleinheit 354 ist ferner an einem Exzenter 356 befestigt, der wiederum an der Drehwelle 352 befestigt ist und eine Exzentrizität zwischen der Drehachse der Drehwelle 352 und dem Befestigungspunkt der Stelleinheit 354 am Exzenter 356 bereitstellt. Die über den Exzenter 356 an der Drehwelle 352 befestigte Stelleinheit 354 ist eine lineare Stelleinheit, die dazu ausgebildet ist, auf den Exzenter 356 eine translatorische Bewegung auszuüben. Durch die Exzentrizität wandelt der Exzenter 356 die auf ihn von der Stelleinheit 354 aufgebrachte Translation in eine Rotation der Drehwelle 352 um, wodurch die Blockierungselemente 342, 344 in die gewünschte Stellung gedreht werden können.

Die Stelleinheit 354 kann beispielsweise eine pneumatisch betätigte Stelleinheit sein, die über das sich am Sattelauflieger 104 befindliche Druckluftsystem mit Druckluft versorgt werden kann, beispielsweise ein pneumatischer Membranzylinder. In weiteren Ausführungsformen kann die Stelleinheit 354 eine hydraulisch oder elektrisch betätigte Stelleinheit sein. Vorzugsweise ist die Stelleinheit 354 ein unabhängig vom Zündungszustand des Zugfahrzeugs 102 betätigbare Stelleinheit. Das heißt, dass die Stelleinheit 354 auch dann die Blockierungselemente 342, 344 in die gewünschte Stellung bewegen kann, wenn das Zugfahrzeug 102 abgeschaltet ist. Beispielsweise weist die Blockierungsvorrichtung 340 eine Batterie auf, die dazu ausgebildet ist, die Stelleinheit 354 mit elektrischer Energie zu versorgen.

Die Stellvorrichtung 350 weist ferner eine Spanneinrichtung 353, beispielsweise eine Feder, auf, die dazu ausgebildet ist, die Welle 352 und somit die Blockierungselemente 342, 344 in Richtung der Freigabestellung vorzuspannen. Bei Entlastung der Stelleinheit 354, beispielsweise durch Entlüftung der Stelleinheit 354, ist die Spanneinrichtung 353 dazu ausgebildet, die Welle 352 derart zu drehen, dass sich die Blockierungselemente 342, 344 in die Freigabestellung bewegen bzw. drehen.

Die Fig. 8 zeigt eine Schnittansicht durch den Befestigungspunkt der Stelleinheit 354 am Exzenter 356 entlang der Linie VIII - VIII der Fig. 7. Der Fig. 8 ist zu entnehmen, dass die Stelleinheit 354 eine Stellstange 355 aufweist, an deren Ende ein U-förmiges Befestigungselement 357 angebracht ist, das mittels einem Bolzen 359 eine Verbindung zum Exzenter 356 herstellt. Die Drehwelle 352 ist, wie in den Fig. 7 und 8 gezeigt, im Bereich der Anbindung des Exzenters 356 an der Drehwelle 352 mit einem rechteckigen Querschnitt ausgeführt, damit eine feste Verbindung zwischen dem Exzenter 356 und der Drehwelle 352 bereitgestellt werden kann. In weiteren Ausführungsformen kann die Drehwelle 352 jede beliebige Querschnittsform aufweisen, die eine feste und starre Verbindung zum Exzenter 356 bereitstellen kann.

In den Fig. 9 und 10 ist ein beispielhafter Sensor 370 dargestellt, der dazu ausgebildet ist, am Fahrzeugrahmen 108 befestigt zu werden und ein Signal zu erzeugen, das ein zumindest teilweises Anheben der Kippmulde 112 gegenüber dem Fahrzeugrahmen 108 anzeigt, so dass die Blockierungselemente 342, 344 in ihre Blockierungsstellungen bewegt werden. In der Fig. 9 ist die Kippmulde 112 in einer Position gezeigt, in der die Kippmulde 112 auf dem Fahrzeugrahmen 108 über Stützelemente (in den Zeichnungen nicht dargestellt) aufliegt. Somit ist die Kippmulde 112 in der Fig. 9 in der vollständig abgesenkten Position dargestellt, in der sich die Blockierungselemente 342, 344 in der Freigabestellung befinden.

Der Sensor 370 weist ein Ventil 372 auf, das über ein Befestigungselement 375 am Fahrzeugrahmen 108 starr befestigt ist. Das Ventil 372 ist über eine Zuleitung 371 mit dem Druckluftsystem des Zuggespanns 100 verbunden. Das Ventil 372 ist außerdem über Ableitungen 373 mit der Stelleinheit 354 der Stellvorrichtung 350 verbunden, die Druckluft der Stelleinheit 354 zuführen bzw. die Stelleinheit 354 entlüften können. Das Ventil 372 ist beispielsweise ein Steuerungsventil, das die Druckluftversorgung der Stelleinheit 354 steuern kann.

Der Sensor 370 weist zudem ein am Ventil 372 drehbar angebrachtes Steuerungselement 374 auf, das in Abhängigkeit seiner jeweiligen Drehposition relativ zum Ventil 372 die Verbindung zwischen der Zuleitung 371 und der Ableitung 373 steuert. Ein Tastelement 376 ist starr an dem Steuerungselement 374 befestigt und ist dazu ausgebildet, mit der Kippmulde 112 in Kontakt zu gelangen. Insbesondere ist an der Kippmulde 112 ein speziell für das Tastelement 376 vorgesehenes Kontaktelement 377 angebracht.

Wird die Kippmulde 112 um die Drehachse 115 zumindest teilweise gekippt (siehe Fig. 1), bewegt sich die Kippmulde 112 aus der in der Fig. 9 gezeigten vollständig abgesenkten Position in die in der Fig. 10 gezeigten zumindest teilweise angehobenen Position. Das Steuerungselement 374 ist zusammen mit dem Tastelement 376 in die in der Fig. 10 gezeigte Stellung vorgespannt ist, so dass sich während dem Kippvorgang der Kippmulde 112 das Tastelement 376 dem Kontaktelement 377 zunächst folgt, bis sich der Kontakt löst. Dadurch dreht sich Steuerungselement 374 relativ zum Ventil 372, das dadurch geöffnet wird, und es wird eine Verbindung zwischen der Zuleitung 371 und den Ableitungen 373 hergestellt.

In der in der Fig. 10 gezeigten Stellung des Sensors 370 ist die Verbindung zwischen der Zuleitung 371 und den Ableitungen 373 hergestellt und der Stelleinheit 354 kann durch das Druckluftsystem des Zuggespanns 100 Druckluft zugeführt werden. Somit ist es möglich, die Blockierungselemente 342, 344 automatisch in die Blockierungsstellung zu bewegen, wenn der Sensor ein Anheben der Kippmulde 112 gegenüber dem Fahrzeugrahmen 112 erfasst.

Das in den Fig. 9 und 10 gezeigte Ventil 372 kann in weiteren Ausführungsformen ein hydraulisches Ventil sein, das die hydraulische Verbindung zwischen der Stelleinheit 354 und einem sich am Zuggespann 100 befindlichen Hydrauliksystem (nicht gezeigt) steuert und somit die Blockierungsvorrichtung 340 betätigt.

Im Folgenden wird unter Verweis auf die Fig. 1 bis 10 ein Verfahren zum Blockieren des Einfederungswegs der Federungseinrichtung 320 beschrieben.

Wenn das in der Fig. 1 gezeigte Zuggespann 100 vor einem Asphaltfertiger 200 fährt und gleichzeitig das sich in der Kippmulde 112 befindliche unverarbeitete Asphaltgut in den Aufnahmebehälter 202 des Asphalfertigers 200 zur weiteren Verarbeitung geschüttet werden soll, muss gewährleistet werden, dass der Abstand A zwischen Fahrzeugrahmen 108 des Kippsattelaufliegers 104 und dem Aufnahmebehälter 202 ausreichend groß, damit es zu keiner Kollision zwischen der Kippmulde 112 und dem Aufnahmebehälter 202 oder zwischen dem Fahrzeugrahmen 108 und dem Aufnahmebehälter 202 kommt. Außerdem kann bei einem zu kleinen Abstand A ein ordnungsgemäßes Ausschütten des Asphaltguts nicht durchgeführt werden, da der Asphaltfertiger 200 nicht unter die Ausschüttöffnung 114 fahren kann.

Hierzu wird vorgeschlagen, den Einfederungsweg der Federungseinrichtung 320 derart zu blockieren, dass der Abstand H (siehe Fig. 1) zwischen dem Fahrzeugrahmen 108 und der Fahrbahn konstant gehalten werden kann. Vorzugsweise wird der Einfederungsweg der Federeinrichtung 320 der hintersten Radachse 310 des Fahrwerks 105 blockiert.

Wird ein bestimmter Betriebszustand des Fahrzeugs 104 ermittelt, beispielsweise ein Kippvorgang der Kippmulde 112 mittels dem Sensor 370, kann der Blockierungsvorrichtung 340 ein entsprechendes Signal bereitgestellt werden. In weiteren Beispielen kann der Betriebszustand vom Zündungszustand des Fahrzeugs 104 abhängen, d. h. dass die Stellvorrichtung 350 die Blockierungselemente 342, 344 in die Blockierungsstellung bewegt, sobald die Zündung des Zugfahrzeugs 102 abgeschaltet ist. In weiteren Beispielen kann die Blockierungsvorrichtung 340 durch eine manuelle Eingabe eines Bedieners erfolgen, beispielsweise durch betätigen eines entsprechenden Knopfes.

Wenn ein vorbestimmter Betriebszustand des Fahrzeugs 104 vorliegt, werden die Blockierungselemente 342, 344 in die Blockierungsstellung bewegt. Damit die Blockierungselemente 342, 344 aus der Freigabestellung in die Blockierungsstellung bewegt werden können, wird zunächst die Federungseinrichtung 340 ausgefedert (beispielsweise durch Befüllen der Luftbälge 322, 324 mit Druckluft), so dass sich ein Vertikalabstand E zwischen dem Fahrzeugrahmen 108 und der Radachse 310 einstellt, größer als der Blockierungsabstand D (siehe Fig. 3 und 4) ist. In der ausgefederten Stellung der Federungseinrichtung 320 wird die Stelleinheit 354 betätigt (beispielsweise via ein vom Sensor 370 bereitgestellten Signals), so dass diese über eine lineare Ansteuerung des Exzenters 356 die Drehwelle 352 derart dreht, dass sich die Blockierungselemente 342, 344 aus der Freigabestellung in die Blockierungsstellung drehen. Aufgrund des vorliegenden Vertikalabstands E zwischen dem Fahrzeugrahmen 108 und der Federungseinrichtung 320, der durch das Ausfedern der Federungseinrichtung 320 bereitgestellt wird und größer als der Blockierungsabstand D ist, können die Blockierungselemente 342, 344 problemlos in die Blockierungsstellung gedreht werden.

Nachdem die Blockierungselemente 342, 344 in die Blockierungsstellung gedreht wurden, wird die Federungseinrichtung 320 entlastet (beispielsweise durch ein Entlüften der Luftbälge 322, 324), wodurch die Federungseinrichtung 320 soweit einfedert, bis der Fahrzeugrahmen 108 auf den Blockierungselementen 342, 344 aufliegt (siehe Fig. 4) und der Blockierungsabstand D vorliegt.

In der in der Fig. 4 gezeigten Stellung ist der Einfederungsweg der Federungseinrichtung 320 blockiert, so dass der Blockierungsabstand D vorliegt. An dieser Stelle ist zu erwähnen, dass durch die in den Zeichnungen dargestellte Blockierungsvorrichtung 340 lediglich der Einfederungsweg der Federungseinrichtung 320 blockiert ist, jedoch die Federungseinrichtung 320 weiterhin ausfedern kann.

In weiteren Ausführungsformen können die Blockierungselemente 342, 344 ferner dazu ausgebildet sein, mit dem Fahrzeugrahmen 108 derart einzugreifen, dass neben dem Einfederungsweg auch der Ausfederungsweg der Federungseinrichtung 320 blockiert ist. Beispielweise können die ersten Abstützungsbereiche 345 der Blockierungselemente 342, 344 mit einer Eingriffsvorrichtung, wie z. B. einem Hakenelement, vorgesehen sein, die mit einem am Fahrzeugrahmen 108 angebrachten entsprechenden Gegenelement, wie z. B. einer Öse, eingreifen kann und somit auch der Ausfederungsweg der Federungseinrichtung 320 blockiert ist.

Die in den Zeichnungen beispielhaft dargestellte Blockierungsvorrichtung 340 ist an der Radachse 310 befestigt.

Die vorliegende Offenbarung ist nicht auf das in den Zeichnungen beispielhaft gezeigte Zuggespann 100 beschränkt. Beispielsweise ist die erfindungsgemäße Radachsenbaugruppe 300 an jeglichen Fahrzeugen anwendbar, wie beispielsweise Lastkraftwagen, Bussen, Fahrzeuganhängern, landwirtschaftlichen Fahrzeugen und Fahrzeuganhängern,, Tiefladern, Containerfahrzeugen oder Gardinensattelaufliegern, bei denen eine Blockierung des Einfederungswegs der Federungseinrichtung 320 erwünscht ist.

Insbesondere ist die erfindungsgemäße Radachsengruppe 300 an Nutzfahrzeugen einsetzbar, die über eine Laderampe be- und entladen werden. Wenn das Fahrzeug 104 an der Laderampe steht, ist während dem Be- und Entladevorgang die Zündung des Fahrzeugs 102 üblicherweise ausgeschaltet. Während dem Be- und Entladevorgang können die Blockierungselemente 342, 344 in die Blockierungsstellung bewegt werden, wodurch der Einfederungsweg der Federungseinrichtung 320 blockiert wird. Durch das Blockieren der Federungseinrichtung 320 kann sichergestellt werden, dass der Niveauunterschied zwischen der Laderampe und der Ladefläche des Fahrzeugs 104 konstant bleibt und nicht schwankt. Somit kann beispielsweise ein sicheres Einfahren von der Laderampe auf die Ladefläche und ein sicheres Ausfahren von der Ladefläche auf die Laderampe mit einem Stapler oder einem Hubwagen gewährleistet werden.

Ferner kann durch das Blockieren der Federungseinrichtung 320 die Standfestigkeit des Fahrzeugs 104 erhöht werden, was insbesondere während Kippvorgängen von Kipperfahrzeugen und Kippsattelaufliegern vorteilhaft ist. Beispielsweise kann durch die Blockierungsvorrichtung 340 das Risiko reduziert werden, dass ein Kippsattelauflieger mit einer aufgestellten Kippmulde zur Seite kippt, weshalb die seitliche Kippstabilität des Kippsattelaufliegers erhöht werden kann.

## Patentansprüche

1. Radachsenbaugruppe (300) für Fahrzeuge (104), die dazu ausgebildet ist, an einem Fahrzeugrahmen (108) des Fahrzeugs (104) federnd gelagert zu werden, wobei die Radachsenbaugruppe (300) aufweist:
- eine Radachse (310),
- eine Federungseinrichtung (320) zum federnden Lagern der Radachse (310) des Fahrzeugs (104), und
- eine an der Radachse (310) angebrachte Blockierungsvörrichtung (340) zum Blockieren des Einfederungswegs der Federungseinrichtung (320) zum federnden Lagern der Radachse (310), wobei die Blockierungsvorrichtung (340) umfasst:
- zwei Blockierungselemente (342, 344), die drehbeweglich gelagert und zwischen einer Freigabestellung und einer Blockierungsstellung bewegbar sind und die derart ausgebildet sind, dass jeweils eine den Einfederungsweg der Federungseinrichtung (320) einzig in der Blockierungsstellung blockiert, und
- eine Stellvorrichtung (350), die mit den beiden Blockierungselementen (342, 344) verbunden und dazu ausgebildet ist, die beiden Blockierungselemente (342, 344) zwischen der Freigabestellung und der Blockierungsstellung gemeinsam zu bewegen.

2. Radachsenbaugruppe (300) nach Anspruch 1, wobei die Stellvorrichtung (350) eine Drehwelle (352), an der die Blockierungselemente (342, 344) befestigt sind, und eine Stelleinheit (354) aufweist, die mit der Drehwelle (352) verbunden und dazu ausgebildet ist, die Drehwelle (352) zum Bewegen der Blockierungselemente (342, 344) zu drehen.

3. Radachsenbaugruppe (300) nach Anspruch 2, wobei die Stelleinheit eine lineare Stelleinheit (354) ist, die mit der Drehwelle (352) über einen Exzenter (356) exzentrisch verbunden ist.

4. Radachsenbaugruppe (300) nach Anspruch 2 oder 3, wobei die Stelleinheit (354) eine pneumatisch betätigte Stelleinheit, eine hydraulisch betätigte Stelleinheit oder eine elektrisch betätigte Stelleinheit ist.

5. Radachsenbaugruppe (300) nach einem der vorhergehenden Ansprüche, wobei jedes Blockierungselement (342, 344) ein starres Element ist, das in der Blockierungsstellung dazu ausgebildet ist, einen vorbestimmten Blockierungsabstand (D) zwischen dem Fahrzeugrahmen (108) und der Radachse (310) zu fixieren.

6. Radachsenbaugruppe (300) nach einem der vorhergehenden Ansprüche, wobei jedes Blockierungselement (342, 344) einen ersten Abstützungsbereich (345), der dazu ausgebildet ist, in der Blockierungsstellung den Fahrzeugrahmen (108) abzustützen, einen zweiten Abstützungsbereich (346), der dazu ausgebildet ist, sich in der Blockierungsstellung auf der Radachse (310) abzustützen, und einen den ersten Abstützungsbereich (345) mit dem zweiten Abstützungsbereich (346) verbindenden Verbindungsbereich (348) aufweist.

7. Radachsenbaugruppe (300) nach Anspruch 6, wobei der Verbindungsbereich (348) in seiner Länge variabel einstellbar ist, so dass ein gewünschter Blockierungsabstand (D) zwischen der Radachse (310) und dem Fahrzeugrahmen (108) eingestellt werden kann.

8. Radachsenbaugruppe (300) nach einem der vorhergehenden Ansprüche, ferner mit einem Sensor (370), der dazu ausgebildet ist, der Stellvorrichtung (350) ein Signal bereitzustellen, das einen vorbestimmten Betriebszustand des Fahrzeugs (104) anzeigt, wobei die Stellvorrichtung (350) dazu ausgebildet ist, die Blockierungselemente (342, 344) in Abhängigkeit des vom Sensor (370) erfassten Betriebszustands des Fahrzeugs (104) in der Blockierungsstellung anzuordnen.

9. Radachsenbaugruppe (300) nach einem der vorhergehenden Ansprüche, wobei die beiden Blockierungselemente (342, 344) dazu ausgebildet sind, den Einfederungsweg der Federungseinrichtung (320) an jeweils einer Seite der Radachse (310) zu blockieren.

10. Radachsenbaugruppe (300) nach einem der vorhergehenden Ansprüche, wobei die Blockierungselemente (342) zudem dazu ausgebildet sind, den Ausfederungsweg der Federungseinrichtung (320) in der Blockierungsstellung zu blockieren.

11. Radachsenbaugruppe (300) nach einem der voranstehenden Ansprüche, wobei die Federungseinrichtung (320) eine Spiralfederungseinrichtung, eine Luftfederungseinrichtung, eine hydropneumatische Federungseinrichtung oder eine Blattfederungseinrichtung ist.

12. Fahrzeuganhänger (104) mit:
- einem Fahrzeuganhängerrahmen (108) und
- zumindest einer am Fahrzeugrahmen (108) federnd gelagerten Radachsenbaugruppe (300) nach einem der voranstehenden Ansprüche.

## Claims

1. A wheel axle assembly (300) for a vehicle (104), which is adapted to be spring-mounted on a vehicle frame (108) of the vehicle (104), the wheel axle assembly (300) comprising:
- a wheel axle (310),
- a suspension device (320) for resiliently supporting the wheel axle (310) of the vehicle (104), and
- a blocking device (340) fixed to the wheel axle (310) for blocking the compression path of the suspension device (320) for resiliently supporting the wheel axle (310), the blocking device (340) comprising:
- two rotatably supported blocking elements (342, 344), which are moveable between a release position and a blocking positon, and formed such that a respective one of the two blocks the compression path of the suspension device (320) only in the blocking position, and
- an actuator (350) connected with the two blocking elements (342, 344) and adapted to jointly move the two blocking elements (342, 344) between the release position and the blocking position.

2. The wheel axle assembly (300) according to claim 1, wherein the actuator (350) comprises a rotary shaft (352) to which the blocking elements (342, 344) are attached, and an adjusting unit (354) connected to the rotary shaft (352) and adapted to rotate the rotary shaft (352) for moving the blocking elements (342, 344).

3. The wheel axle assembly (300) according to claim 2, wherein the adjusting unit is a linear adjusting unit (354) eccentrically connected to the rotary shaft (352) by means of an eccentric (356).

4. The wheel axle assembly (300) according to claim 2 or 3, wherein the actuator (354) is a pneumatically operated actuator, a hydraulically operated actuator, or an electrically operated actuator.

5. The wheel axle assembly (300) according to one of the preceding claims, wherein each blocking element (342, 344) is a rigid element which, in the blocking position, is adapted to fix a predetermined blocking distance (D) between the vehicle frame (108) and the wheel axle (310).

6. The wheel axle assembly (300) according to one of the preceding claims, wherein each blocking element (342, 344) is provided with a first support portion (345) adapted to support the vehicle frame (108) in the blocking position, a second support portion (346) adapted to be supported by the wheel axle (310) in the blocking position, and a connecting portion (348) connecting the first support portion (345) with the second supporting portion (346).

7. The wheel axle assembly (300) according to claim 6, wherein the length of the connecting portion (348) is variably adjustable, such that a desired blocking distance (D) can be adjusted between the wheel axle (310) and the vehicle frame (108).

8. The wheel axle assembly (300) according to one of the preceding claims, further comprising a sensor (370), which is adapted to supply a signal indicating a predetermined operating state of the vehicle (104) to the actuator (350), the actuator (350) being adapted to arrange the blocking elements (342, 344) depending on the vehicle (104) operating state detected by the sensor (370).

9. The wheel axle assembly (300) according to one of the preceding claims, wherein the two blocking elements (342, 344) are adapted to block the compression path of the suspension device (320) at a respective side of the wheel axle (310).

10. The wheel axle assembly (300) according to one of the preceding claims, wherein the blocking elements (342) are further adapted to block the rebound of the suspension device (320) in the blocking position.

11. The wheel axle assembly (300) according to one of the preceding claims, wherein the suspension device (320) is a coil spring suspension device, a pneumatic suspension device, a hydropneumatic suspension device, or a leaf spring suspension device.

12. A vehicle trailer (104) comprising
- a vehicle trailer frame (108) and
- at least a wheel axle assembly (300) according to one of the preceding claims, which is resiliently supported on the vehicle frame (108).

## Revendications

1. Ensemble formant essieu de roue (300) pour des véhicules (104), qui est réalisé pour être monté sur ressorts au niveau d'un châssis de véhicule (108) du véhicule (104), dans lequel l'ensemble formant essieu de roue (300) présente :
- un essieu de roue (310),
- un système de suspension (320) servant à supporter sur ressorts l'essieu de roue (310) du véhicule (104), et
- un dispositif de blocage (340) installé au niveau de l'essieu de roue (310) servant à bloquer la course de compression du système de suspension (320) servant à supporter sur ressorts l'essieu de roue (310), dans lequel le dispositif de blocage (340) comprend :
- deux éléments de blocage (342, 344), qui sont montés de manière mobile en rotation et qui peuvent être déplacés entre une position de déblocage et une position de blocage et qui sont réalisés de telle manière que respectivement un bloque la course de compression du système de suspension (320) seulement dans la position de blocage, et
- un dispositif de réglage (350), qui est relié aux deux éléments de blocage (342, 344) et qui est réalisé pour déplacer conjointement les deux éléments de blocage (342, 344) entre la position de déblocage et la position de blocage.

2. Ensemble formant essieu de roue (300) selon la revendication 1, dans lequel le dispositif de réglage (350) présente un arbre rotatif (352), au niveau duquel les éléments de blocage (342, 344) sont fixés, et une unité de réglage (354), qui est reliée à l'arbre rotatif (352) et qui est réalisée afin de faire tourner l'arbre rotatif (352) aux fins du déplacement des éléments de blocage (342, 344).

3. Ensemble formant essieu de roue (300) selon la revendication 2, dans lequel l'unité de réglage est une unité de réglage (354) linéaire, qui est reliée de manière excentrique à l'arbre rotatif (352) par l'intermédiaire d'un excentrique (356).

4. Ensemble formant essieu de roue (300) selon la revendication 2 ou 3, dans lequel l'unité de réglage (354) est une unité de réglage à actionnement pneumatique, une unité de réglage à actionnement hydraulique ou une unité de réglage à actionnement électrique.

5. Ensemble formant essieu de roue (300) selon l'une quelconque des revendications précédentes, dans lequel chaque élément de blocage (342, 344) est un élément rigide, qui est réalisé dans la position de blocage afin de fixer une distance de blocage (D) prédéfinie entre le châssis de véhicule (108) et l'essieu de roue (310).

6. Ensemble formant essieu de roue (300) selon l'une quelconque des revendications précédentes, dans lequel chaque élément de blocage (342, 344) présente une première zone de soutien (345), qui est réalisée pour soutenir le châssis de véhicule (108) dans la position de blocage, une deuxième zone de soutien (346), qui est réalisée aux fins du soutien sur l'essieu de roue (310) dans la position de blocage et une zone de liaison (348) reliant la première zone de soutien (345) à la deuxième zone de soutien (346).

7. Ensemble formant essieu de roue (300) selon la revendication 6, dans lequel la zone de liaison (348) peut être réglée de manière variable dans sa longueur de sorte qu'une distance de blocage (D) souhaitée entre l'essieu de roue de roue (310) et le châssis de véhicule (108) puisse être réglée.

8. Ensemble formant essieu de roue (300) selon l'une quelconque des revendications précédentes, avec en outre un capteur (370) qui est réalisé pour fournir au dispositif de réglage (350) un signal, qui indique un état de fonctionnement prédéfini du véhicule (104), dans lequel le dispositif de réglage (350) est réalisé afin de disposer dans la position de blocage les éléments de blocage (342, 344) en fonction de l'état de fonctionnement du véhicule (104) détecté par le capteur (370).

9. Ensemble formant essieu de roue (300) selon l'une quelconque des revendications précédentes, dans lequel les deux éléments de blocage (342, 344) sont réalisés pour bloquer la course de compression du système de suspension (320) au niveau de respectivement un côté de l'essieu de roue (310).

10. Ensemble formant essieu de roue (300) selon l'une quelconque des revendications précédentes, dans lequel les éléments de blocage (342) sont réalisés de plus pour bloquer la course de détente du système de suspension (320) dans la position de blocage.

11. Ensemble formant essieu de roue (300) selon l'une quelconque des revendications précédentes, dans lequel le système de suspension (320) est un système de suspension en spirale, un système de suspension pneumatique, un système de suspension hydropneumatique ou un système de suspension à lames.

12. Remorque de véhicule (104) avec :
- un châssis de remorque de véhicule (108) et
- au moins un ensemble formant essieu de roue (300) monté sur ressorts au niveau du châssis de véhicule (108) selon l'une quelconque des revendications précédentes.
